# EUROPÄISCHE PATENTSCHRIFT

(11) **EP 2 062 791 B1**
(45) Veröffentlichungstag und Bekanntmachung des Hinweises auf die Patenterteilung: **20.10.2010**
(21) Anmeldenummer: 08014411.6
(22) Anmeldetag: 13.08.2008
(51) Int. Cl.: B60R 21/34

(54) **Frontend mit Stossfänger-und Fussgängerschutzquerträger**
Front-end with bumper and pedestrian production cross member
Extrémité frontale dotée d'une traverse de pare-chocs et de protection des piétons

(30) Priorität: 15.11.2007 DE 102007054490
(43) Veröffentlichungstag der Anmeldung: 27.05.2009
(73) Patentinhaber: HBPO GmbH, 59557 Lippstadt (DE)
(72) Erfinder: Kersting, Dirk, 59555 Lippstadt (DE)
(74) Vertreter: Schober, Mirko

(56) Entgegenhaltungen:
- EP-A- 1 813 485
- WO-A-2006/008137
- FR-A- 2 668 436
- FR-A- 2 884 201
- US-A1- 2003 184 122

## Beschreibung

Die Erfindung bezieht sich auf ein Frontend für Personen- und Kleinlastkraftwagen gemäß den Merkmalen des Oberbegriffs des Patentanspruchs 1.

Bei Frontends für Personen- und Kleinlastkraftwagen stellt der Stoßfängerüberzug ein an dem betreffenden Fahrzeug designorientiertes Frontbauteil dar, an dessen vorderseitige Sichtfläche hohe Anforderungen hinsichtlich einer Ebenmäßigkeit gestellt werden. Im Fachjargon spricht man bei dem Stoßfängerüberzug von einem "Class A Surface"-Bauteil, an dessen Sichtfläche dreidimensionale Unregelmäßigkeiten, auch wenn sie relativ klein sein sollten, nicht hingenommen werden. Deshalb scheidet die Ausbildung von Versteifungsrippen aus dem Kunststoff des Stoßfängerüberzugs an dessen Rückseite in Höhe der vorderseitig sichtbaren Flächen aus. Denn das Anformen solcher rückseitiger Versteifungsrippen erzeugt auf der Vorder- bzw. Frontseite des Stoßfängerüberzugs Einfallstellen und Abzeichnungen, die durch das Schwinden des Kunststoffs an Anhäufungsstellen bedingt sind.

Im Stand der Technik sind, wie aus dem Dokument WO 2006/008137 A1 ersichtlich, Ausführungen bekannt, die dem eingangs erwähnten Frontend entsprechen. Der den Stoßfängerquerträger überdeckende Stoßfängerüberzug reicht hierbei nach unten hin bis über den Fußgängerschutzquerträger hinweg, der als separates Verstärkungselement ausgebildet ist. Mit entsprechender Dimensionierung und Verrippung stellt der Fußgängerschutzquerträger am Frontend ein Bauteil dar, welches, wie der englische Fachausdruck "lower stiffener" angibt, eine für den Fußgängerschutz notwendige Steifigkeit aufweist. Der Fußgängerschutzquerträger ist unterhalb des Stoßfängerquerträgers in demjenigen Bereich angeordnet, in welchem der Unterschenkelanprall eines angefahrenen Fußgängers stattfindet. Insoweit sind bei solchen Ausführungen sowohl der notwendigerweise steife Stoßfängerquerträger als auch der mit einer integrierten Verstärkung versehene Fußgängerschutzquerträger Bauteile des Frontends, an denen der nicht versteifte Stoßfängerüberzug nach hinten hin abgestützt wird. Dies erfordert eine aufpralldämpfende Zwischenlage zwischen dem Stoßfängerüberzug und dem Stoßfängerquerträger einerseits sowie dem Fußgängerschutzquerträger andererseits. So hat man bei den bekannten Ausführungen vermieden, im Bereich des Fußgängerschutzquerträgers eine Versteifung des Stoßfängerüberzugs mittels einer daran rückseitigen, einstückigen Rippenstruktur mit den hierdurch bedingten Nachteilen vorsehen zu müssen.

Aus dem Dokument DE 10 2004 007 571 A1 ist ein Frontend bekannt, welches einen Stoßfängerquerträger und einen mit Abstand darunter angeordneten Fußgängerschutzquerträger aufweist. Der Fußgängerschutzquerträger ist auch hier als separates, versteiftes Bauteil ausgeführt, das einstückig aus Kunststoff besteht. Es ist ein Stoßfängerüberzug vorhanden, der lediglich den Stoßfängerquerträger an seiner Vorderseite überdeckt.

Weiter veranschaulichen die zitierten Dokumente eine Abstützung des Fußgängerschutzquerträgers in der Fahrzeuglängsrichtung nach hinten hin über einen zum Frontend zugehörigen Montageträger zur Aufnahme von Kühlmodulen, Lampen und weiteren Bauteilen. Der Montageträger seinerseits stützt sich an der Karosseriestruktur, insbesondere an den Fahrzeuglängsträgern ab.

Der Erfindung liegt die Aufgabe zugrunde, bei einem Frontend mit den eingangs genannten Merkmalen eine einfachere Lösung für die Ausbildung des Fußgängerschutzquerträgers zu schaffen, ohne damit die ästhetischen Eigenschaften des Stoßfängerüberzugs zu beeinträchtigen.

Diese Aufgabe wird mit einem Frontend gelöst, welches die Gesamtheit der Merkmale des Patentanspruchs 1 aufweist.

Für die Erfindung ist wesentlich, daß der Fußgängerschutzquerträger in den Stoßfängerüberzug integriert ist. So wird bei der Herstellung des Stoßfängerüberzugs in Gestalt eines Kunststoffformteils, sei es durch Spritzgießen oder durch eine andere Art der Kunststoffformung, das den Fußgängerschutzquerträger bildende Hohlprofil zugleich mit eingeformt einschließlich der darin zur Versteifung notwendigen Verstärkungsrippen. Hierbei treten zwar an der Vorderseite des Fußgängerschutzquerträgers, also an der Kunststoffhaut die erwähnten Einfallstellen und Abzeichnungen auf, sie werden jedoch durch die auf den Fußgängerschutzquerträger vorderseitig aufgesetzte Abdeckung kaschiert, wobei diese Abdeckung an ihrer frontseitigen Sichtseite den ästhetischen Anforderungen entsprechend ausgeführt werden kann.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:
- Fig. 1: in schematischer Darstellung einen Ver- tikalschnitt durch den Frontabschnitt eines PKW-Frontends,
- Fig. 2: die Vorderansicht eines Fig. 1 entspre- chenden Stoßfängerüberzugs,
- Fig. 3: die Vorderansicht eines auf den Stoßfän- gerüberzug nach Fig. 1 aufsetzbaren Spoilers,
- Fig. 4: die Ansicht des Stoßfängerüberzugs nach Fig. 2 mit dem darauf aufgesetzten Spoi- ler gem. Fig. 3 und
- Fig. 5: eine Fig. 1 entsprechende Darstellung einer weiteren Ausführungsform eines PKW-Frontends.

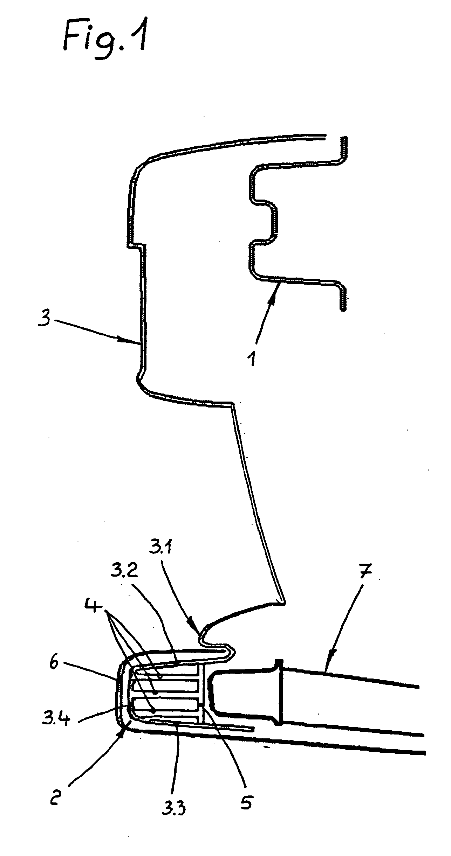

In Fig. 1 erkennt man einen Stoßfängerquerträger 1 im Schnitt. Er wird insoweit als "Querträger" bezeichnet, weil er sich in der Einbaulage des Frontends im wesentlichen in Fahrzeugquerrichtung erstreckt. Gleiches gilt für den in Fig. 1 weiter dargestellten Fußgängerschutzquerträger 2, der sich unterhalb des Stoßfängerquerträgers 1 befindet und von diesem einen Abstand hat, dessen Größe sich nach dem für ihn notwendigen Bodenabstand richtet, um die Fußgängerschutzfunktion erfüllen zu können. Der Stoßfängerquerträger 1 ist mittels eines Stoßfängerüberzugs 3 kaschiert, zwischen dem und dem Stoßfängerquerträger 1 eine aufpralldämpfende Zwischenlage vorgesehen ist, die nicht dargestellt ist. Bei dem Stoßfängerüberzug 3 handelt es sich um ein Kunststoffformteil, welches bevorzugt mittels Spritzgießen hergestellt wird.

Man erreicht hierdurch am Stoßfängerüberzug 3 an seiner vom Stoßfängerquerträger 1 abgewandten Frontseite eine hohe Oberflächenqualität. Diese ist erforderlich, denn die Frontseite des Stoßfängerüberzugs 3 ist in der Einbaulage des Frontends an der Bugseite des betreffenden Fahrzeugs sichtbar, weswegen sie insbesondere bei der meist vorgesehenen, spiegelnden Lackierung frei von auch nur geringfügigen Unebenheiten sein muß. Der Begriff "Unebenheiten" gilt hier auch für gewölbte Flächen, die strenggenommen im technischen Sinne nicht eben sind.

Der Stoßfängerüberzug 3 weist einen unteren Abschnitt 3.1 auf, in welchen der Fußgängerschutzquerträger 2 eingeformt ist. Dazu ist der betreffende Abschnitt des Teilbereichs 3.1 des Stoßfängerüberzugs 3 zu einem Hohlprofil verformt, welches zur Rückseite des Stoßfängerüberzugs 3 hin offen ist. Der Querschnitt des Stoßfängerüberzugs 3 in diesem Abschnitt ist beim dargestellten Ausführungsbeispiel U-förmig, ebenso kann das Hohlprofil auch eine C- oder V-förmige Querschnittsgestalt haben. So weist der Stoßfängerüberzug 3 einen oberen Steg 3.2, einen unteren Steg 3.3 und einen vorderen Steg 3.4 auf, die in das Kunststoffmaterial des unteren Abschnitts 3.1 des Stoßfängerüberzugs 3 eingeformt sind. Im Innenraum des den Fußgängerschutzquerträger 2 bildenden Hohlprofils finden sich Verstärkungsrippen 4 und 5, die einstückig mit dem Stoßfängerüberzug 3 sind, denn sie sind sogleich beim Spritzgießvorgang an den Stoßfängerüberzug 3 mit angegossen, um zusammen mit dem U-förmigen Wandungsbereich 3.2 - 3.4 den Fußgängerschutzquerträger 2 zu bilden. Da die Verstärkungsrippen 4, 5 an den Wandbereich 3.2 - 3.4 des Stoßfängerüberzugs 3 angeformt sind, treten an der Vorderseite dieses Wandbereichs 3.2 - 3.4 die aufgrund des Kunststoffschwundes unvermeidbaren Einfallstellen und Abzeichnungen auf.

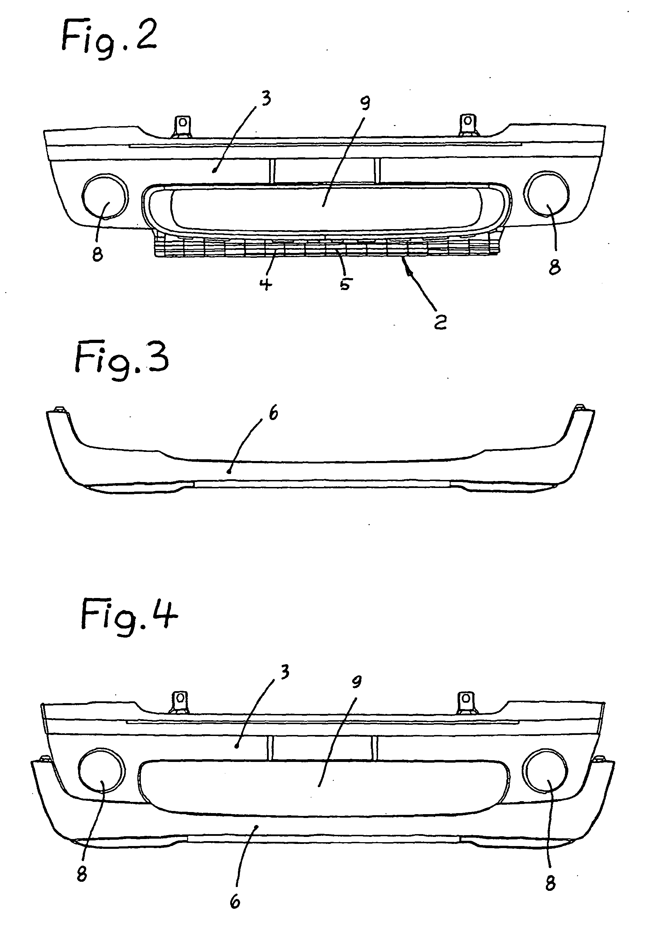

Deshalb ist auf die Vorderseite des in den Stoßfängerüberzug 3 integrierten Fußgängerschutzquerträgers 2 eine Abdeckung 6 aufgesetzt, deren Vorderseite als Sichtseite mit derjenigen Oberflächengüte versehen ist, die im Bereich des Fußgängerschutzquerträgers 2 die hohen ästhetischen Anforderungen erfüllt, die in den übrigen Sichtbereichen an den Stoßfängerüberzug 3 gestellt werden. Fig. 2 veranschaulicht den Stoßfängerüberzug 3 einschließlich dem daran ausgebildeten unteren Fußgängerschutzquerträger 2, bei welchem die innenliegenden Verstärkungsrippen 4, 5 angedeutet sind. Fig. 3 macht deutlich, daß die den Fußgängerschutzquerträger 2 kaschierende Abdeckung 6 in bevorzugter Weise als Spoiler ausgeführt ist. Die Abdeckung 6 erstreckt sich nicht nur über die Länge des Fußgängerschutzquerträgers 2 in der Fahrzeugquerrichtung, sie kann insbesondere seitlich über den Fußgängerschutzquerträger 2 überstehen und weitere Bereiche des Stoßfängerüberzugs 3 abdecken oder daran anschließen. Dies erkennt man in Fig. 4, in welcher die Abdeckung 6 in an den Stoßfängerüberzug 3 angesetzter Lage wiedergegeben ist. Zumindest in demjenigen Bereich, in welchem die Abdeckung 6 den Fußgängerschutzquerträger 2 überdeckt, ist sie mit einem Innenprofil versehen, welches an das Außenprofil des Fußgängerschutzquerträgers 2 angepaßt ist. So kann die Abdeckung 6 in dem genannten Bereich ein Innenprofil aufweisen, welches in Gestalt eines Negativprofils dem Außenprofil des Fußgängerschutzquerträgers entspricht.

Fig. 2 und 4 machen weiter deutlich, daß der Stoßfängerüberzug 3 in denjenigen Bereichen, die nicht zur Abdeckung des Stoßfängerquerträgers 1 bestimmt sind, nicht geschlossenwandig ausgeführt sein muß. So können Durchbrechungen 8 für Nebellampen und zumindest eine Öffnung 9 für einen Kühlluftdurchtritt vorgesehen sein.

Der Fußgängerschutzquerträger 2 hat aufgrund seiner Innenverrippung eine eigene Steifigkeit, er muß dennoch in Fahrzeuglängsrichtung nach hinten hin abgestützt werden. Dazu ist ein Stützelement 7 vorgesehen, wie Fig. 1 in erster Ausführung weiter zeigt. Das Stützelement 7 greift nicht an irgendeiner Stelle des unteren Teilbereichs 3.1 des Stoßfängerüberzugs 3 an, sondern an den Verstärkungsrippen 4, 5, also dort, von wo aus ausreichend hohe Kräfte im Fall einer Stoßbelastung von dem Fußgängerschutzquerträger 2 auf die Stütze 4 übertragen werden können. Das Stützelement 7 ist vorzugsweise an einem Montageträger befestigt, wobei auch ein unterer Querträger des Montageträgers das Stützelement 7 bilden kann. Der Montageträger ist Teil des Frontends und nimmt Kühlmodule, die frontseitigen Fahrzeuglampen und sonstige Bauteile auf. In anderer Ausführung kann das Stützelement 7 unmittelbar mit der Karosseriestruktur des jeweiligen Fahrzeugs verbunden sein.

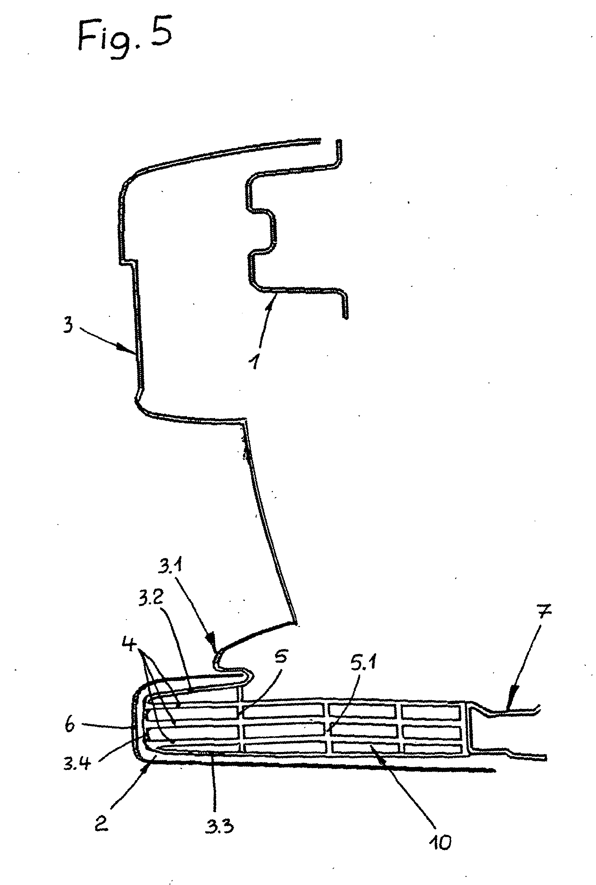

Fig. 5 zeigt eine Ausführungsform, die insbesondere zum Einsatz kommt, wenn zwischen dem Stützelement 7 und dem Fußgängerschutzquerträger 2 ein ausreichender Abstand besteht, um hierzwischen ein Aufpralldämpfungselement vorsehen zu können. Dieses Aufpralldämpfungselement wird durch eine Rippenstruktur 10 gebildet, die eine Fortsetzung der entsprechend ausgeformten Verstärkungsrippen 4 und/oder 5 im Hohlprofil des Fußgängerschutzträgers 2 darstellt. So sind die Verstärkungsrippen 4 in Fahrzeuglängsrichtung nach hinten hin, also von der Frontseite weg verlängert und treten entsprechend aus dem nach hinten hin offenen Hohlprofil des Fußgängerschutzquerträgers 2 heraus.

Parallel zu den quer verlaufenden Verstärkungsrippen 5 sind bei der Rippenstruktur 10 Querrippen 5.1 vorhanden. Die Rippenstruktur 10 ist ein plattenförmiges Gebilde, es ist also in Fahrzeuglängsrichtung gesehen weitaus länger als es in Fahrzeughochrichtung dick ist.

## Patentansprüche

1. Frontend für Personen- und Kleinlastkraftwagen mit einem Stoßfängerquerträger (1) und mit einem Fußgängerschutzquerträger (2), der sich mit Abstand unterhalb des Stoßfängerquerträgers (1) befindet, wobei der Stoßfängerquerträger (1) mit einem Stoßfängerüberzug (3) in Gestalt eines einstückigen Kunststoffformteils frontseitig überdeckt ist und der Stoßfängerüberzug (3) einen unteren Teilbereich (3.1) aufweist, der zumindest bis in den Bereich des Fußgängerschutzquerträgers (2) reicht, wobei der Fußgängerschutzquerträger (2) in dem unteren Teilbereich (3.1) des Stoßfängerüberzugs (3) als an dessen Rückseite offenes Hohlprofil eingeformt ist, welches mittels einstückig aus dem Kunststoff des Stoßfängerüberzugs (3) gebildeter Verstärkungsrippen (4, 5) in seinem Hohlraum versteift ist, wobei auf die Vorderseite des Fußgängerschutzquerträgers (2) eine Abdeckung (6) aufgesetzt ist.

2. Frontend nach Anspruch 1,
**dadurch gekennzeichnet,**
**daß** der Stoßfängerüberzug (3) mit dem integrierten Fußgängerschutzquerträger (2) ein Spritzgießteil ist.

3. Frontend nach Anspruch 1 oder 2,
**dadurch gekennzeichnet,**
**daß** der Fußgängerschutzquerträger (2) einen die Verstärkungsrippen (4, 5) umschließenden äußeren Wandbereich (3.2 - 3.4) aufweist, der im Querschnitt U- oder C-förmig ist.

4. Frontend nach Anspruch 3,
**dadurch gekennzeichnet,**
**daß** die Versteifungsrippen (4, 5) sowohl an den oberen und den unteren Stegen (3.2, 3.3) als auch an dem vorderen Steg (3.4) des äußeren Wandungsbereichs (3.2 - 3.4) des Fußgängerschutzquerträgers (2) einstückig anschließen.

5. Frontend nach einem der Ansprüche 1 - 4,
**dadurch gekennzeichnet,**
**daß** die vorderseitig auf den Fußgängerschutzquerträger (2) aufgesetzte Abdeckung (6) als Spoiler ausgebildet ist.

6. Frontend nach einem der Ansprüche 1 - 5,
**dadurch gekennzeichnet,**
**daß** die Abdeckung (6) als rückseitig offener Hohlkörper ausgeführt ist, dessen Innenkontur an die vorderseitige Außenkontur des Fußgängerschutzquerträgers (2) angepaßt ist.

7. Frontend nach Anspruch 6,
**dadurch gekennzeichnet,**
**daß** die Innenkontur der Abdeckung (6) als Negativkontur zur vorderseitigen Außenkontur des Fußgängerschutzquerträgers (2) ausgebildet ist.

8. Frontend nach einem der Ansprüche 1 - 7,
**dadurch gekennzeichnet,**
**daß** zumindest ein feststehendes Stützelement (7) vorgesehen ist, das an der Rückseite des Fußgängerschutzquerträgers (2) angeordnet ist und an der die Verstärkungsrippen (4, 5) des Fußgängerschutzquerträgers (2) anliegen.

9. Frontend nach Anspruch 8,
**dadurch gekennzeichnet,**
**daß** die Verstärkungsrippen (4, 5) zumindest in dem dem Stützelement (7) vorgelegenen Bereich zu einer plattenförmigen Rippenstruktur (10) verlängert sind, die aus dem den Fußgängerschutzquerträger (2) bildenden Hohlprofil nach hinten herausragt.

## Claims

1. Front end for passenger cars and light vehicles with a bumper cross member (1) and a pedestrian protection cross member (2) which is located at a distance beneath the bumper cross member (1) wherein the bumper cross member (1) is covered at the front with a bumper cover (3) in the form of a one-piece plastics moulded part and the bumper cover (3) has a lower partial area (3.1) which extends at least into the area of the pedestrian protection cross member (2) wherein the pedestrian protection cross member (2) in the lower partial area (3.1) of the bumper cover (3) is moulded in as a hollow profile which is open at the back and which is reinforced in its hollow cavity by means of reinforcement ribs (4, 5) which are formed in one piece from the plastics of the bumper cover (3) wherein a cover plate (6) is fitted onto the front of the pedestrian protection cross member (2).

2. Front end according to claim 1 **characterised in that** the bumper cover (3) is an injection moulded part with the integrated pedestrian protection cross member (2).

3. Front end according to claim 1 or 2 **characterised in that** the pedestrian protection cross member (2) has an outer wall area (3.2 - 3.4) having a U- or C-shaped cross-section enclosing the reinforcement ribs (4, 5).

4. Front end according to claim 3 **characterised in that** the reinforcement ribs (4, 5) adjoin integrally both the upper and the lower webs (3.2, 3.3) as well as the front web (3.4) of the outer wall area (3.2 - 3.4) of the pedestrian protection cross member (2).

5. Front end according to one of claims 1 to 4 **characterised in that** the cover plate (6) which is fitted onto the front of the pedestrian protection cross member (2) is designed as a spoiler.

6. Front end according to one of claims 1 to 5 **characterised in that** the cover plate (6) is designed as a hollow body which is open at the back and whose internal contour is adapted to match the front outer contour of the pedestrian protection cross member (2).

7. Front end according to claim 6 **characterised in that** the internal contour of the cover plate (6) is formed as a negative contour to the front outer contour of the pedestrian protection cross member (2).

8. Front end according to one of claims 1 to 7 **characterised in that** at least one fixed support element (7) is provided which is mounted at the back of the pedestrian protection cross member (2) and against which the reinforcement ribs (4, 5) of the pedestrian protection cross member (2) bear with contact.

9. Front end according to claim 8 **characterised in that** the reinforcement ribs (4, 5) are extended at least in the area in front of the support element (7) into a plate-type rib structure (10) which projects backwards out from the hollow profile which forms the pedestrian protection cross member (2).

## Revendications

1. Extrémité frontale pour voiture particulière ou camionnette, dotée d'une traverse de pare-chocs (1) et d'une traverse de protection des piétons (2), qui est située sous la traverse de pare-chocs (1), à distance de celle-ci, la traverse de pare-chocs (1) étant recouverte, à l'avant, par un revêtement pare-chocs (3) consistant en une pièce moulée en matière synthétique, formée d'une pièce, et le revêtement pare-chocs (3) présentant une partie inférieure (3.1), qui s'étend au moins jusque dans le secteur de la traverse de protection des piétons (2), la traverse de protection des piétons (2) étant formée dans la zone inférieure (3.1) du revêtement pare-chocs (3), en tant que profilé creux, ouvert à l'arrière, qui est renforcé, dans son espace creux, par des nervures de renforcement (4, 5), formées d'une pièce par la matière synthétique du revêtement pare-chocs (3), une pièce de recouvrement (6) étant placée sur la face avant de la traverse de protection des piétons (2).

2. Extrémité frontale selon la revendication 1,
**caractérisée en ce que**
le revêtement pare-chocs (3), avec la traverse de protection des piétons (2) intégrée, est une pièce moulée par injection.

3. Extrémité frontale selon revendication 1 ou 2,
**caractérisée en ce que**
la traverse de protection des piétons (2) comprend une zone de paroi extérieure (3.2 - 3.4), qui, entourant les nervures de renforcement (4, 5), présente une section transversale en U ou en C.

4. Extrémité frontale selon la revendication 3,
**caractérisée en ce que**
les nervures de renforcement (4, 5) se raccordent d'une pièce aussi bien aux pattes supérieures et inférieures (3.2, 3.3) qu'à la patte antérieure (3.4) de la zone de paroi extérieure (3.2 - 3.4) de la traverse de protection des piétons (2).

5. Extrémité frontale selon l'une des revendications 1 à 4,
**caractérisée en ce que**
la pièce de recouvrement (6), installée, en avant, sur la traverse de protection des piétons (2), est réalisée sous la forme d'un spoiler.

6. Extrémité frontale selon l'une des revendications 1 à 5,
**caractérisée en ce que**
la pièce de recouvrement (6) est réalisée en tant que corps creux, ouvert à l'arrière, dont le contour intérieur est adapté au contour extérieur avant de la traverse de protection des piétons (2).

7. Extrémité frontale selon la revendication 6,
**caractérisée en ce que**
le contour intérieur de la pièce de recouvrement (6) est configuré en tant que contour négatif par rapport au contour extérieur avant de la traverse de protection des piétons (2).

8. Extrémité frontale selon l'une des revendications 1 à 7,
**caractérisée en ce que**
l'on prévoit au moins un élément de support (7) fixe, qui est disposé sur la face arrière de la traverse de protection des piétons (2) et contre lequel portent les nervures de renforcement (4, 5) de la traverse de protection des piétons (2).

9. Extrémité frontale selon la revendication 8,
**caractérisée en ce que**
les nervures de renforcement (4, 5) sont prolongées, au moins dans la zone située en amont de l'élément de support (7), par une structure nervurée (10) en forme de plaque, qui fait saillie en arrière, à partir du profilé creux formant la traverse de protection des piétons (2).
